# EUROPÄISCHE PATENTSCHRIFT

(11) **EP 3 405 419 B1**
(45) Veröffentlichungstag und Bekanntmachung des Hinweises auf die Patenterteilung: **02.07.2025**
(21) Anmeldenummer: 17701464.4
(22) Anmeldetag: 23.01.2017
(51) Int. Cl.: B65G 67/22, E01C 23/088, G05D 1/00, E01C 19/48

(54) **SYSTEM AUS BAUMASCHINE, TRANSPORTFAHRZEUG MIT LADERAUM UND BILDAUFNAHMEEINRICHTUNG UND VERFAHREN ZUM ANZEIGEN EINES BILDSTROMES BEIM BE- ODER ENTLADEN EINES TRANSPORTFAHRZEUGES**
SYSTEM FORMED BY A CONSTRUCTION MACHINE, TRANSPORT VEHICLE WITH A LOADING SPACE AND IMAGE-CAPTURING DEVICE, AND METHOD FOR DISPLAYING AN IMAGE STREAM WHEN LOADING OR UNLOADING A TRANSPORT VEHICLE
SYSTÈME COMPRENANT UN ENGIN DE CHANTIER, UN VÉHICULE DE TRANSPORT DOTÉ D'UN ESPACE DE CHARGEMENT ET UN DISPOSITIF DE PRISE DE VUE, ET PROCÉDÉ POUR AFFICHER UN COURANT D'IMAGES LORS DU CHARGEMENT OU DU DÉCHARGEMENT D'UN VÉHICULE DE TRANSPORT

(30) Priorität: 21.01.2016 DE 102016000535; 27.05.2016 DE 102016006303
(43) Veröffentlichungstag der Anmeldung: 28.11.2018
(73) Patentinhaber: Wirtgen GmbH, 53578 Windhagen (DE)
(72) Erfinder: BORKOWSKI, Helmut, 52379 Langerwehe (DE)
(74) Vertreter: dompatent von Kreisler Selting Werner - Partnerschaft von Patent- und Rechtsanwälten mbB
(86) Internationale Anmeldenummer: PCT/EP2017/051340
(87) Internationale Veröffentlichungsnummer: WO 2017/125607

(56) Entgegenhaltungen:
- EP-A1- 2 020 174
- EP-A1- 2 510 775
- EP-A2- 2 573 266
- DE-A1- 19 647 522
- DE-U1- 202012 003 513
- DE-U1- 9 402 324
- JP-U- H04 122 711
- US-A1- 2009 142 133

## Beschreibung

Die Erfindung betrifft ein System aus Baumaschine, Transportfahrzeug mit Laderaum und Bildaufnahmeeinrichtung. Außerdem betrifft die Erfindung ein Verfahren zum Anzeigen eines Bildstromes beim Be- oder Entladen eines Transportfahrzeuges.

Transportfahrzeuge werden mit einer Vielzahl an unterschiedlichen Ladungsmethoden befüllt. So wird beispielsweise mittels eines Förderbandes Schüttgut auf Transportfahrzeuge geladen. Dieser Ladevorgang ist vor allem bei Baumaschinen weit verbreitet, deren primäre Funktion nicht darin besteht, Transportfahrzeuge zu beladen.

Eine gleichmäßige Verteilung von Schüttgut auf dem Laderaum wird angestrebt aber häufig nicht erreicht, da dies von einer einwandfreien Kommunikation zwischen Transportfahrzeugführer und Baumaschinenführer abhängt. Der Baumaschinenführer muss für die primäre Maschinenbedienung eine hohe Konzentration aufbringen und zusätzlich dem Fahrer des Transportfahrzeugs ein geeignetes Signal geben, um sein Fahrzeug zu bewegen. Derartige Signale können akustisch oder optisch übermittelt werden.

Die Baumaschine kann beispielsweise ein eine Vorderlader-Fräsmaschine sein, bei der das Fräsgut nach vorne auf das vorausfahrende Transportfahrzeug abgeworfen wird. Dabei ist die Geschwindigkeit des Transportfahrzeugs im Allgemeinen höher als die der Straßenfräsmaschine. Folglich wandert die Abwurfstelle oberhalb der Ladefläche des Transportfahrzeugs von vorne nach hinten. Dies kann der Maschinenführer der Straßenfräsmaschine beobachten. Wenn sich die Abwurfstelle am hinteren Ende der Ladefläche befindet, betätigt der Maschinenführer der Straßenfräsmaschine die Hupe, um den Fahrzeugführer des Transportfahrzeugs aufzufordern, das Transportfahrzeug zu stoppen. Da die Straßenfräsmaschine weiterfährt, wandert die Abwurfstelle zu dem vorderen Ende der Ladefläche. Wenn die Abwurfstelle das vordere Ende der Ladefläche erreicht hat, betätigt der Maschinenführer der Straßenfräsmaschine wieder die Hupe, um den Fahrzeugführer des Transportfahrzeugs zum Anfahren aufzufordern. Auf diese Weise bewegt sich das Transportfahrzeug intermittierend vorwärts, wohingegen sich die Baumaschine kontinuierlich vorwärts bewegt.

Die Aufforderung zum Anfahren und Stoppen des Transportfahrzeugs mit Hupsignalen kann in manchen Situationen problematisch sein. Problematisch kann die Situation sein, in der der Fahrzeugführer des Transportfahrzeugs das Hupsignal überhört, oder wenn ein anderes vorbeifahrendes Fahrzeug ein Hupsignal abgibt, so dass der Fahrzeugführer des Transportfahrzeugs irrtümlich meint, sein Fahrzeug vorbewegen zu müssen. Überhört der Fahrzeugführer das Hupsignal, kann es zu einer Kollision der Baumaschine mit dem Transportfahrzeug kommen, oder die Bedienungsperson der Fräsmaschine muss den kontinuierlichen Fräsbetrieb stoppen.

Zum anderen kann der Baumaschinenführer, das bei einem speziellen Transportfahrzeug mögliche Schüttgutgewicht nicht genau abschätzen, da die Transportfahrzeug unterschiedliche Baugrößen aufweisen und daher das Schüttgutgewicht nur ungenau geschätzt werden kann. Eine zu hohe Beladung beeinträchtigt jedoch die Verkehrssicherheit und eine zu niedrige Beladung ist wirtschaftlich nachteilig. Letztlich muss auch immer darauf geachtet werden, dass bei einer Bewegung von Transportfahrzeug und/oder Baumaschine keine Kollisionen entstehen.

Mittels Transportfahrzeugen wird auch Schüttgut zu den Baustellen transportiert, wo dieses Schüttgut dann weiter verwendet wird. Um einen effizienten Materialtransport zu garantieren, wird das Schüttgut oftmals direkt vom Transportfahrzeug in die Baumaschine entladen. Die Baumaschinen befördern diese Material dann zum direkten Einbau oder zum Befüllen von anderen Baumaschinen mittels Förderband. Dies ist unter Baumaschinen weit verbreitet, deren primäre Funktion darin liegt, Material zu verbauen.

Dabei wird jedoch oftmals die vollständige Entladung des Schüttgutes aus dem Laderaum des Transportfahrzeugs nicht erreicht, da auch die Entladung des Schüttgutes von der einwandfreien Kommunikation zwischen Transportfahrzeugführer und Baumaschinenführer abhängt. Der Transportfahrzeugführer kann den Entladefortschritt auch nicht genau einschätzen, da der Laderaum beim Entladen gekippt ist und der Transportfahrzeugführer somit keinen Einblick in den Laderaum hat.

Insbesondere zum Entladen ist der Transportfahrzeugführer oftmals gezwungen, die Baumaschine genau anzufahren und dort anzudocken, bevor das Muldenfahrzeug entleert wird. Dabei entstehen leicht Kollisionen zwischen dem Muldenfahrzeug und der Baumaschinen.

Bei einer Baumaschine, die ein Straßenfertiger ist, wird der Straßenfertiger mit Material beladen während sich der Straßenfertiger langsam vorwärts bewegt. Das Transportfahrzeug fährt langsam rückwärts an den Straßenfertiger heran bis ein Kontakt zwischen Straßenfertiger und Transportfahrzeug besteht. Danach wird das Transportfahrzeug von dem Straßenfertiger vor dem Straßenfertiger hergeschoben und es erfolgt die Entleerung.

Besonders kompliziert wird der Prozess, wenn das Transportfahrzeug während der Andockphase in Bewegung ist und ein starker Zusammenstoß zwischen Baumaschine und Transportfahrzeug vermieden werden muss. Dies führt zu einer oft hektischen Kommunikation zwischen dem Transportfahrzeug führer und dem Baumaschinenführer während des Andockvorganges vor der Entleerung oder der Befüllung des Transportfahrzeugs.

Das Dokument EP 2 573 266 A2 offenbart ein System nach dem Oberbegriff des Anspruchs 1.

Der Erfindung liegt daher die Aufgabe zugrunde, ein System und ein Verfahren bereitzustellen, mit denen die Koordination zwischen Transportfahrzeug und Baumaschine verbessert wird.

Diese Aufgabe wird mit einem System mit den Merkmalen des Patentanspruches 1 und mit einem Verfahren mit den Merkmalen des Patentanspruches 6 gelöst.

Vorteilhafte Weiterbildungen sind Gegenstand der Unteransprüche.

Erfindungsgemäß, ist eine Bildaufnahmeeinrichtung an der Baumaschine angeordnet und zumindest auf den Laderaum des Transportfahrzeugs ausgerichtet, wobei eine Empfangs- und Anzeigeeinrichtung an oder in dem Transportfahrzeug angeordnet ist, wobei die von der Bildaufnahmeeinrichtung aufgenommenen Daten mittels einer an der Baumaschine angeordneten Sendeeinrichtung an die Empfangs- und Anzeigeeinrichtung übermittelt werden.

Das Transportfahrzeug kann ein Muldenfahrzeug oder ein LKW mit Ladefläche bzw. Laderaum sein.

Die Anordnung der Bildaufnahmeeinrichtung an der Baumaschine hat den Vorteil, dass bei vielen wechselnden Transportfahrzeugen zum An- und Abtransport von Material, nur eine Bildaufnahmeeinrichtung an der Baumaschine benötigt wird und nicht jeweils für jedes Fahrzeug eine Bildaufnahmeeinrichtung benötigt wird. Beim Positionieren des Transportfahrzeugs relativ zur Baumaschine wird zwangsläufig dafür gesorgt, dass die Bildaufnahmeeinrichtung optimal auf den Laderaum des Transportfahrzeugss ausgerichtet ist. Obwohl vor allem der Fahrzeugführer des Transportfahrzeugs für das Bewegen des Transportfahrzeugs optimale Bilder benötigt, wird erfindungsgemäß die Bildaufnahmeeinrichtung nicht am Transportfahrzeug, sondern an der Baumaschine angeordnet.

Die Daten können dem Fahrzeugführer des Transportfahrzeugs kabellos wie beispielsweise über das Internet, WLAN, Bluetooth oder ähnliche Einrichtungen übermittelt werden. Dabei reichen auch Übertragungsmedien für kürzere Strecken aus, da der Fahrzeugführer des Transportfahrzeugs nur dann Informationen der Bildaufnahmeeinrichtung an der Baumaschine benötigt, wenn er sein Transportfahrzeug in die Nähe der Baumaschine bewegt hat.

Die gleiche Empfangs- und Anzeigeeinrichtung im Umfeld des Transportfahrzeugführers kann daher mit unterschiedlichen Bildaufnahmeeinrichtungen an unterschiedlichen Baumaschinen kommunizieren. Ein definiertes Format erlaubt es, dem Transportfahrzeug führer Bilder von jeweils derjenigen Baumaschine zur Verfügung zu stellen, in deren Umfeld sich der Transportfahrzeugführer befindet. Der Transportfahrzeugführer benötigt somit nur eine Empfangs- und Anzeigeeinrichtung, während die Baumaschine eine Bildaufnahmeeinrichtung und eine Sendeeinrichtung benötigt.

Die aufgenommenen Daten sind Bilddaten. Die Daten können verschlüsselt oder unverschlüsselt übermittelt werden. Auch kann der Umfang der zu übermittelnden Daten an die Verbindungsqualität angepasst werden.

Erfindungsgemäß wird es vorgesehen, dass die Baumaschine eine Fördereinrichtung aufweist und die Bildaufnahmeeinrichtung auch auf die Fördereinrichtung ausgerichtet ist. Dies ermöglicht es, gleichzeitigt den Laderaum des Transportfahrzeugs und die Fördereinrichtung zu beobachten. Während es bei der Ladefläche um eine gleichmäßige Beladung geht, liegt bei der Beobachtung der Fördereinrichtung der Schwerpunkt auf der Vermeidung einer Kollision zwischen Fördereinrichtung und Transportfahrzeug.

Der Anwender kann nach einer speziellen Ausführungsform der Erfindung auf einem geteilten Bild des Überwachungsdisplays den Laderaum in Fahrtrichtung des Transportfahrzeugs in einem ersten Bild und die Ladevorrichtung der Baumaschine in einem separaten zweiten Bild sehen. In diesem separaten zweiten Bild kann der Anwender die möglichen Kollisionspunkte sehen, um eine Kollision zwischen Transportfahrzeug und Fördereinrichtung beziehungsweise Beladeeinrichtung zu vermeiden.

Um mit der Bildaufnahmeeinrichtung einen guten Überblick zu gewährleisten, wird vorgeschlagen, dass die Bildaufnahmeeinrichtung an der Fördereinrichtung angeordnet ist. Dies ermöglicht einerseits eine relativ hoch gelegene Positionierung und andererseits eine Positionierung während des Be- und Entladens in der Nähe des Transportfahrzeugs. Zudem ergibt sich der Vorteil, dass die Bildaufnahmeeinrichtung gemeinsam mit dem Förderband verschwenkt werden kann.

Muss das Förderband in Richtung der Ladefläche verschwenkt werden (beispielsweise weil Transportfahrzeug und Baumaschine aufgrund von Gegebenheiten auf der Baustelle zueinander versetzt fahren müssen), so bleibt die Bildaufnahmeeinrichtung dennoch auf das Transportfahrzeug und insbesondere den zu beladenden Laderaum gerichtet.

Die Bildaufnahmeeinrichtung kann um eine Traverse zur Laufrichtung eines Förderbandes der Fördereinrichtung oberhalb des Schwerpunktes der Fördereinrichtung schwenkbar gelagert sein. Dabei kann mittels eines Antriebs oder eines Gewichtes sichergestellt werden, dass auch bei einer Winkelverstellung des Förderbandes die Ausrichtung der Bildaufnahmeeinrichtung relativ zur Ebene des Untergrundes unverändert bleibt.

Eine derart hängend schwenkbare Lagerung führt auch zu einem Schutz der Bildaufnahmeeinrichtung, die dadurch bei einem Zusammenstoß nachgeben kann, in dem sie um den Lagerpunkt geschwenkt wird. Alternativ ist ein Schutz auch dadurch zu erzielen, dass die Bildaufnahmeeinrichtung an der Baumaschine und insbesondere an einer Fördereinrichtung der Baumaschine elastisch gelagert ist, um bei einem Zusammenstoß schwenkbar zu sein und danach wieder die ursprüngliche Position einzunehmen.

Das beschriebene System erleichtert es somit dem Führer des Transportfahrzeugs und/oder der Baumaschine den Ladevorgang im Überblick zu behalten, um effektiv den Ladeprozess kontrollieren zu können, indem das Transportfahrzeug präzise an dem Punkt platziert wird, an dem die Ladung auf einen bestimmten Ort des Laderaumes des Transportfahrzeugs geladen wird. Das Montieren der Bildaufnahmeeinrichtung an der Baumaschine hat den Vorteil, dass der Abwurfpunkt in seiner Relation zu dem Überwachungsbild konstant bleibt und die Aufstellung des Transportfahrzeugs hierdurch vereinfacht wird. Eine hohe Position der Anordnung der Bilderaufnahmeeinrichtung an der Baumaschine hat den Vorteil, dass das Überwachungsbild eine komplette Übersicht darstellen kann.

Insbesondere im Hinblick auf das Entladen eines Muldenfahrzeuges wird ein System vorgeschlagen, bei dem die Baumaschine einen Aufnahmebehälter aufweist und die Bildaufnahmeeinrichtung auch auf den Aufnahmebehälter ausgerichtet ist. Dies ermöglicht es, ein Überwachungsbild auf dem Display des Anwenders geteilt anzuzeigen, d.h. der Laderaum in Fahrtrichtung des Transportfahrzeugs in einem Bild und die Aufnahmevorrichtung der Baumaschine, d.h. den Aufnahmebehälter in einem separaten Bild. Das Bild des Aufnahmebehälters kann dem Anwender mögliche Kollisionspunkte zwischen Aufnahmebehälter und Transportfahrzeug zeigen. Eine Aufnahme des Laderaumes und des Aufnahmebehälters ermöglicht es den Anwender, den Entladevorgang im Überblick zu behalten, um ihn sicher und effektiv zu kontrollieren. Insbesondere kann der Fahrzeugführer des Transportfahrzeugs das Transportfahrzeug an dem Punkt platzieren, an dem die Ladung nach dem Andockverfahren sicher in den Aufnahmebehälter entladen werden kann.

Je nach Ausführungsform der Baumaschine ist es vorteilhaft, die Bildaufnahmeeinrichtung möglichst hoch anzuordnen. Daher wird vorgeschlagen, dass die Bildaufnahmeeinrichtung im obersten Drittel der Baumaschine angeordnet ist.

Die Bildaufnahmeeinrichtung kann eine oder mehrere Kameras zur Aufnahme einzelner Bilder aufweisen. Erfindungsgemäß könne die Kameras unterschiedlich ausgebildet sein und beispielsweise unterschiedliche Wellenlängenbereiche erfassen und/oder unterschiedlichen Aufnahmetechniken aufweisen. Es können beispielsweise übliche optische Kameras, die den sichtbaren Bereich des Lichts erfassen, oder Infrarotkameras verwendet werden. Alternativ können beispielsweise Erfassungseinrichtungen wie PMD-Kameras verwendet werden, die über Laufzeitmessung zusätzlich Entfernungsinformationen zur Verfügung stellen können. Werden mehrere Kameras verwendet können gleichzeitig verschiedene Aufnahmeverfahren verwendet oder unterschiedliche Wellenlängenbereiche erfasst werden. So kann beispielsweise eine Infrarotkamera und eine Kamera für Wellenlengenbereiche entsprechend sichtbarem Licht oder eine optische Kamera mit einem CCD Sensor und eine Kamera mit PMD Sensor verwendet werden.

Besonders vorteilhaft ist es, wenn die Bildaufnahmeeinrichtung mindestens eine Kamera zur Aufnahme eines Bildstromes aufweist. Ein derartiger Bildstrom zeigt kontinuierlich jegliche Veränderung der Positionen von Transportfahrzeug und Baumaschine und die Veränderung auf dem Laderaum beim Be- und Entladen des Muldenfahrzeuges.

Hierzu eignet sich insbesondere eine Videokamera mit einem Weitwinkelobjektiv und/oder eine Infrarotkamera und/oder eine stereoskopische Kamera und/oder eine PMD-Kamera.

Ein Weitwinkelobjektiv erlaubt die Ausrichtung auf den Laderaum und die Fördereinrichtung oder einen Aufnahmebehälter. Alternativ können hierzu auch zwei Kameras vorgesehen werden, die entsprechend ausgerichtet sind. Daher wird vorgeschlagen, dass die Bildaufnahmeeinrichtung zwei Kameras oder eine Kamera mit zwei Blickwinkeln zur Erzeugung von zwei Teilsatzbildströmen aufweist.

Mit Hilfe einer stereoskopische Kamera und/oder eine PMD-Kamera können zusätzlich Abstandsinformationen erfasst werden.

Insbesondere bei einem Weitwinkelobjektiv können die zwei Teilsatzbildströme auch aus einem ursprünglichen Bildstrom berechnet werden.

Zur Verbesserung der der Aufnahmequalität kann eine zusätzliche Beleuchtung in dem Beobachtungsbereich der Kamera erfolgen. Es kann mindestens ein Leuchtmittel und /oder mindestens ein Spiegel vorgesehen sein, wobei das Leuchtmittel vorzugsweise an oder neben der Kamera angeordnet ist und der Spiegel vorzugsweise derart im Blickfeld der Kamera platziert ist, dass der betrachtbare Bereich vergrößerbar ist.

Die Kamera kann an einem unbemannten Luftfahrzeug angeordnet ist.

Die Bildaufnahmeeinrichtung kann zusätzlich ein Kennzeichen, beispielsweise das amtliche Kennzeichen des Transportfahrzeugs erfassen. Auch das Kennzeichen kann mittels der Sendeeinrichtung an die Empfangs- und Anzeigeeinrichtung gesendet werden.

Die Sendeeinrichtung zusätzlich zu den von der Bildaufnahmeeinrichtung aufgenommenen Daten weitere Daten an die Empfangs- und Anzeigeeinrichtung sendet.

Die weiteren Daten können sonstige Maschineninformationen, insbesondere das Fräsgut betreffende Daten und/oder mit einer Auswerteeinheit aus den Bildinformationen ermittelte Daten und/oder Nachrichten von dem Fahrer der Baumaschine an den Fahrer des Transportfahrzeugs, vorzugsweise von dem Fahrer der Baumaschine vorgegebene Start- oder Stoppsignale für den Fahrer des Transportfahrzeugs, sein.

Fräsgut ist das Material, das mit einer Fräsmaschine abgetragen wird. Die das Fräsgut betreffenden Daten können die Materialeigenschaften des Fräsguts betreffende Daten sein, insbesondere das Material des Fräsguts und/oder Ortsdaten des gefrästen Abschnitts des Bodenbelags.

Bezüglich der Materialeigenschaften des Fräsguts betreffende Daten können dies direkt die Materialeigenschaften des Materials beschreiben oder Daten sein, mit denen Rückschlüsse auf das Material gezogen werden können. Daher können auch im Sinne der Erfindung die Ortsdaten des gefrästen Abschnitts des Bodenbelags die Materialeigenschaften des Fräsguts betreffende Daten sein. Es kann beispielsweise ermittelt werden, welcher Autobahnabschnitt gefräst wird. Es kann bekannt sein, welches Material in dem Autobahnabschnitt verbaut worden ist, so dass anhand des Autobahnabschnitts ermittelt werden kann welches Material verbaut worden ist.

Es kann beispielsweise bekannt sein, welcher Asphalt verbaut worden ist oder welche Zusammensetzung das verbaute Material hat. Auch kann bekannt sein welches Material in unterschiedlichen Schichten des Bodenbelags verbaut worden ist. Der Bodenbelag weist in der Regel eine Deck-, eine Binder- und eine Tragschicht auf. Die bekannten Informationen bezüglich des Materials können in einer Datenbank (z.B. lokal auf der Fräsmaschine oder außerhalb der Fräsmaschine) hinterlegt sein oder es können diese Informationen von einem Bediener der Fräsmaschine eingegeben werden. Die Ortsdaten können auch anhand von GPS Koordinaten ermittelt werden.

Auch können beispielsweise Proben des abgefrästen Materials genommen werden und direkt oder erst später ausgewertet werden. Im Sinne der Erfindung können die die Materialeigenschaften des Fräsguts betreffenden Daten auch Datensignale sein, die die Nummer oder den Namen einer solchen Probe betreffen.

Die das Fräsgut betreffenden Daten können Betriebsparameter der Fräsmaschine sein oder Daten bzw. Datensignale sein, die mithilfe der Betriebsparameter, Ortsdaten oder eingegebener Informationen ermittelt werden. Es können somit sowohl die direkt ermittelten bzw. eingegebenen Daten bzw. Datensignale als auch daraus abgeleitete Daten als das Fräsgut betreffende Daten erfasst werden.

Betriebsparameter können insbesondere Frästiefe, abgetragenes Fräsvolumen, Vorschubgeschwindigkeit, Fräswalzendrehzahl, Verhältnis zwischen Vorschub und Fräswalzendrehzahl, verwendete Fräswalze, abgegebenes Drehmoment/Leistung des Antriebsmotors der Fräsmaschine oder die während des Fräsprozess zur Kühlung der Fräswerkzeuge zugeführte Wassermenge sein. Darüber hinaus kann erfasst werden, ob die Fräse im Gleichlauf- oder Gegenlauffräsen arbeitet (Drehrichtung der Fräswalze gleich-/gegensinnig zu Drehrichtung der Laufwerke). Die das Fräsgut betreffenden Daten können auch Masse und /oder Volumen des auf das Transportfahrzeug verladenen Fräsguts sein.

Wird beispielsweise die Masse des auf das Transportfahrzeug verladenen Fräsgutes erfasst und an den Maschinenbediener und/oder den Transportfahrzeugführer übermittelt kann eine effiziente Beladung des Transportfahrzeuges ohne Über- oder Unterbeladung erfolgen.

Mithilfe dieser Betriebsparameter können Daten ermittelt werden. Dies können Materialeigenschaften des Fräsguts, wie beispielsweise die Korngrößenverteilung im Fräsgut, Feinanteile / Grobanteile sein. Die physischen Eigenschaften können beispielsweise aus dem Verhältnis zwischen Vorschub und Fräswalzendrehzahl oder verwendeter Fräswalze hergeleitet werden.

Weiterhin kann aus den Betriebsparametern, z. B. aus der Frästiefe bestimmt werden, welche Schicht des Bodenbelags gefräst wurde. Der Bodenbelag weist beispielsweise eine Deck-, eine Binder- und eine Tragschicht auf, die in der Regel unterschiedliche Schichtdicken aufweisen. Neben der Frästiefe können beispielsweise auch von der Fräse erfasste Ortsdaten berücksichtigt werden, um zu ermitteln, ob an einer Stelle bereits gefräst wurde. Diese Informationen können korreliert werden, um somit genauere Rückschlüsse auf die gerade gefräste Schicht zu ermöglichen.

Die Empfangs- und Anzeigeeinrichtung kann eine zweite Sendeeinrichtung aufweisen und an der Baumaschine eine zweite Empfangseinrichtung angeordnet sein, so dass von der zweiten Sendeeinrichtung Nachrichten von dem Fahrer des Transportfahrzeugs an den Fahrer der Baumaschine gesendet werden können. Es können somit Nachrichten zwischen dem Transportfahrzeugführer und dem Baumaschinenführer ausgetauscht werden.

Die zweite Sendeeinrichtung und die Empfangs- und Anzeigeeinrichtung können als Einheit ausgebildet sein.

Die zweite Empfangseinrichtung und die Sendeeinrichtung der Baumaschine können ebenfalls als Einheit ausgebildet sein.

Das System kann eine Auswerteeinheit aufweisen. Die Auswerteeinheit kann ein Bildanalyseprogramm aufweisen, das zusätzliche Daten aus den Bildinformationen ermittelt.

Die Auswerteeinheit kann durch Auswerten der Daten der Bildaufnahmeeinrichtung den Füllstand im Laderaum und/oder den Abstand zwischen Baumaschine und Transportfahrzeug und/oder die Auftreffstelle von Material in dem Laderaum ermittelt.

Mittels des Abstandes zwischen Baumaschine und Transportfahrzeug kann eine drohende Kollision von Baumaschine und Transportfahrzeug ermittelt werden.

Die Auftreffstelle des Materials kann die tatsächliche Auftreffstelle des Materials im Laderaum als auch, bei ausgeschalteter Fördereinrichtung, die potentielle Auftreffstelle im Laderaum sein, wenn das Förderband wieder angetrieben wird. Zur Ermittlung der potentiellen Auftreffstelle können auch weitere Parameter, wie beispielsweise die Neigung des Förderbandes einbezogen werden.

Anhand der tatsächlichen Auftreffstelle des Materials im Laderaum kann ermittelt werden, ob das Material noch innerhalb es Laderaums abgeworfen wird und ob die Auftreffstelle im Randbereich des Laderaums ist und somit das Transportfahrzeug sich zeitnah in Bezug zu der Baumaschine wieder bewegen muss.

Die weiteren Daten, die zusätzlich zu den von der Bildaufnahmeeinrichtung aufgenommenen Daten von der Sendeeinrichtung an die Empfangs- und Anzeigeeinrichtung gesendet werden, können von der Auswerteeinheit ermittelte Daten sein, insbesondere Start- oder Stoppsignale für den Fahrer des Transportfahrzeugs und/oder Masse des verladenen Fräsguts und/oder Kollisionswarnung.

Die Auswerteeinheit kann abhängig von der Auftreffstelle des Materials in dem Laderaum und/oder abhängig von dem Abstand zwischen Baumaschine und Transportfahrzeug ein Start- oder Stoppsignal ermitteln, dass über die Sendeeinrichtung an die Empfangs- und Anzeigeeinrichtung gesendet wird.

Zusätzlich kann die Auswerteeinheit auch den Kontrast oder die Helligkeit des mit der Bildaufnahmeeinrichtung aufgenommenen Bildstroms verändern, oder beispielsweise im Bild sichtbare Kanten (zum Beispiel die Ladekanten der Ladefläche und/oder die äußere Begrenzung der Fördereinrichtung) im Bildstrom hervorheben. Hierdurch wird dem Transportfahrzeugführer die optische Auswertung des übertragenen Bildstromes erleichtert.

Das Bildanalyseprogramm kann beispielsweise Teilbildströme auf unterschiedlichen Displays oder auf unterschiedlichen Displaybereichen darstellen und es kann auf den Bildströmen Strukturen der Baumaschine, dem Transportfahrzeug oder dem Laderaum zuordnen, um frühzeigt auf Kollisionen hinzuweisen.

Um das System mit verschiedenen Informationen zu versorgen, wird vorgeschlagen, dass die Bildaufnahmeeinrichtung wenigstens eine Kamera aufweist, die steuerbar schwenkbar gelagert ist. Die Steuerung ermöglicht es einen großen Blickwinkel abzudecken. Die wenigstens eine Kamera kann jedoch auch beispielsweise in Abhängigkeit von der Position und Schräglage der Fördereinrichtung positioniert oder ausgerichtet werden, um beispielsweise bei einer Veränderung der Schräglage der Fördereinrichtung bei einer an der Fördereinrichtung befestigten Kamera deren Ausrichtung auf einen Punkt, wie beispielsweise den Laderaum des Transportfahrzeugs, konstant zu halten.

Zum Schutz der Kamera kann diese hinter Metallbügeln angeordnet sein. Die Metallbügel sind dabei derart angeordnet, dass der Blickwinkel der Kamera möglichst wenig beeinträchtig wird, aber eine Beschädigung der Kamera hinter den Metallbügeln verhindert wird. Alternativ oder kumulativ kann die Kamera elastisch gelagert sein, um im Falle einer Kollision der Kamera mit einem Gegenstand ausweichen zu können und die ursprüngliche Position danach wieder einzunehmen.

Eine bevorzugte Ausführungsvariante sieht vor, dass die Empfangs- und Anzeigeeinrichtung ein tragbaren Computer, vorzugsweise ein Mobiltelefon ist.

Dieser tragbare Computer kann kabelgebunden oder insbesondere kabellos Daten der Bildaufnahmeeinrichtung aufnehmen, verarbeiten und anzeigen. Er kann im Führerhaus des Transportfahrzeugs auch in der Nähe angeordnet sein, um die Zusammenarbeit zwischen Transportfahrzeug und Baumaschine zu verbessern.

Das Transportfahrzeug kann weiterhin beispielsweise durch eine eindeutige Benutzerkennung (z. B. amtliches Kennzeichen des Transportfahrzeuges) identifizierbar sein. Es kann der dem Transportfahrzeug zugehörigen Empfangs- und Anzeigeeinrichtung ein an die aktuelle Aufgabe angepasster Informationsumfang bereitgestellt werden. Es kann somit eine Anpassung erfolgen ob und in welcher Qualität ein Bildstrom zu Verfügung gestellt wird und/oder ob und in welchem Umfang weitere Daten übertragen werden.

Als tragbarer Computer eignet sich vor allem ein Personal Digital Assistant (PDA), der insbesondere als Mobiltelefon in verschiedenen Ausführungsvarianten bereits bekannt ist und vorzugsweise neben anderen Programmen, Kalender und Adressprogramme enthält. Die Computer können Prozessoren und/oder computerlesbare Speicher und/oder Datenbanken aufweisen. Auch können diese ein Benutzerinterface aufweisen. Derartige tragbare Computer können mit einem speziellen Programm ausgerüstet werden, das als Applikation für den Einsatz mit dem System aus Baumaschine, Transportfahrzeug und Bildaufnahmeeinrichtung speziell programmiert ist. Dies ermöglicht es, eine bekannte Anzeigeeinrichtung als Monitor und Eingabeeinheit zur Optimierung der Steuerung von Baumaschine, Transportfahrzeug und Bildaufnahmeeinrichtung, zu verwenden.

An der Baumaschine kann eine erste Speichereinrichtung angeordnet sein und/oder die Empfangs- und Anzeigeeinrichtung kann eine zweite Speichereinrichtung aufweisen, wobei die von der Bildaufnahmeeinrichtung aufgenommenen Daten und/oder die weiteren Daten, die zusätzlich zu den von der Bildaufnahmeeinrichtung aufgenommenen Daten an die Empfangs- und Anzeigeeinrichtung übermittelt werden, in der ersten und/oder der zweiten Speichereinrichtung speicherbar sind.

Die Auswerteeinheit, die Sendeeinrichtung, die Empfangseinrichtung und die Speichereinrichtung können einzeln oder auch zusammen ebenfalls ein Computersystem darstellen. Ein solches Computersystem kann einen oder mehrere Prozessoren und/oder einen oder mehrere computerlesbare Speicher und/oder eine oder mehrere Datenbanken aufweisen. Auch kann es ein oder mehrere Benutzerinterface aufweisen.

Ferner weist ein erfindungsgemäßes Verfahren zum Anzeigen eines Bildstroms beim Beladen oder Entladen eines Transportfahrzeugs, nach dem Anspruch 6, folgende Schritte auf:
- Aufnehmen von Bildern mit einer an einer Baumaschine montierten, zumindest auf den Laderaum des Transportfahrzeugs ausgerichteten Bildaufnahmeeinrichtung,
- Senden, Empfangen und Anzeigen des mit der Bildaufnahmeeinrichtung aufgenommenen Daten auf einer an oder in dem Transportfahrzeug angeordneten Empfangs- und Anzeigeeinrichtung.

Die mit der Bildaufnahmeeinrichtung aufgenommenen Daten kann ein Bildstrom sein. Die Bildaufnahmeeinrichtung kann eine Kamera sein.

Mit diesem Verfahren kann ein Mensch das Be- und Entladen eines Transportfahrzeugs auf einer Empfangs- und Anzeigeeinrichtung so wahrnehmen, dass er auf einfache Art und Weise die Position des Transportfahrzeugs und das Be- und Entladen des Transportfahrzeugs optimieren kann.

Dabei ist es vorteilhaft, wenn bei dem Verfahren zumindest zwei TeilsatzBildströme auf dem Monitor gleichzeitig angezeigt werden, wobei jeder Teilsatzbildstrom einen getrennten Teilsatz von Bildern aus dem ursprünglichen Bildstrom enthält. Dies ermöglicht es, nicht nur einen Ort sondern unterschiedliche Orte wie beispielsweise die Ladefläche und die Beladeeinrichtung oder die Ladefläche und einen Aufnahmebehälter gleichzeitig zu überwachen, um durch eine Steuerung von Transportfahrzeug und Baumaschine den Be- oder Entladeprozess zu optimieren.

Hierbei ist es besonders vorteilhaft, wenn die Kamera von der Baumaschine wegweisend ausgerichtet wird. Diese Ausrichtung ermöglicht es, insbesondere mit einem Weitwinkelobjektiv um die Baumaschine herum, einen großen Arbeitsbereich zu beobachten. Dabei kann auch ein Teil des Bildstromes Teile oder Begrenzungen der Baumaschine erfassen, um insbesondere Kollisionen zu vermeiden.

Eine spezielle Ausführungsvariante sieht vor, dass die Position und/oder die Ausrichtung der Kamera ermittelt wird und der Bildstrom bei einer Positions- oder Ausrichtungsänderung entsprechend der ursprünglichen Ausrichtung angezeigt wird. Das heißt, selbst wenn die Ausrichtung der Kamera durch einen Schwenkvorgang oder ein Zittern der Kamera variiert wird, sorgt die Bildverarbeitung dafür, dass der Monitor ein Bild anzeigt, das einer nichtgeschwenkten oder nichtzitternden Kamera entspricht.

Mindestens ein Leuchtmittel und /oder mindestens ein Spiegel können vorgesehen werden, wobei das Leuchtmittel vorzugsweise an oder neben der Kamera angeordnet wird und der Spiegel vorzugsweise derart im Blickfeld der Kamera platziert wird, dass der betrachtbare Bereich vergrößert wird.

Die Kamera kann an einem unbemannten Luftfahrzeug angeordnet werden. Das unbemannten Luftfahrzeug kann beispielsweise eine Drohne sein.

Zusätzlich kann das Kennzeichen des Transportfahrzeugs erfasst werden.

Zusätzlich zu den aufgenommenen Daten können weitere Daten an die Empfangs- und Anzeigeeinrichtung gesendet werden.

Die weiteren Daten können das Fräsgut betreffende Daten und/oder mit einer Auswerteeinheit aus den Daten der Bildaufnahmeeinrichtung ermittelte Daten und/oder Nachrichten von dem Fahrer der Baumaschine an den Fahrer des Transportfahrzeugs, vorzugsweise von dem Fahrer der Baumaschine vorgegebene Start- oder Stoppsignale für den Fahrer des Transportfahrzeugs, sein. Das Fräsgut betreffende Daten sind weiter oben näher erläutert worden.

Nachrichten von dem Fahrer des Transportfahrzeugs an den Fahrer der Baumaschine können gesendet werden.

Die Verwendung einer Auswerteeinheit ermöglicht es, die mit der Bildaufnahmeeinrichtung aufgenommenen Daten auszuwerten.

Die weiteren Daten, die zusätzlich zu den von der Bildaufnahmeeinrichtung aufgenommenen Daten an die Empfangs- und Anzeigeeinrichtung übermittelt werden, können von der Auswerteeinheit ermittelte Daten sein, insbesondere Start- oder Stoppsignale für den Fahrer des Transportfahrzeugs und/oder Masse des verladenen Fräsguts und/oder Kollisionswarnung.

Mittels der Auswerteeinheit können durch Auswerten der Bilddaten der Füllstand im Laderaum und/oder der Abstand zwischen Baumaschine und Transportfahrzeug und/oder die Auftreffstelle von Material in dem Laderaum ermittelt werden.

Mittels der Auswerteeinheit kann abhängig von der Auftreffstelle des Materials in dem Laderaum und/oder abhängig von dem Abstand zwischen Baumaschine und Transportfahrzeug ein Start- oder Stoppsignal ermittelt werden, das an die Empfangs- und Anzeigeeinrichtung übermittelt wird.

Die Auswerteeinheit kann beispielsweise die Beladung der Ladefläche des Transportfahrzeugs überwachen und bei einem Schüttkegel, der eine Vorgabe übertrifft, ein Signal auslösen, das dem Fahrzeugführer anzeigt, dass er die Position der Ladefläche verändern muss. Wenn die Auswerteeinheit Umgrenzungen eines Transportfahrzeugs und Umgrenzungen der Baumaschine erkennt und vom Transportfahrzeug unterscheidet, kann sie bei einer zu nahen Annäherung von Transportfahrzeug und Baumaschine durch ein Signal auf eine zu befürchtende Kollision hinweisen.

Die Empfangs- und Anzeigeeinrichtung kann ein tragbarer Computers sein. Als Empfangs- und Anzeigeeinrichtung eignet sich auch jegliches andere funkfähige, mobile Kommunikationsgerät.

Die Empfangs- und Anzeigeeinrichtung kann im Cockpit des Transportfahrzeugs angeordnet sein.

Um mehreren Beteiligten die Überwachungsbilder kostengünstig zur Verfügung stellen zu können, wird vorgeschlagen, dass der Bildstrom auf mindestens zwei Monitoren angezeigt wird. Dafür ist es vorteilhaft, wenn die Überwachungsbilder durch eine mobile Applikation zur Verfügung gestellt werden. Hierzu kann eine passwortgesicherte Funkverbindung zwischen dem den Monitor aufweisenden Computer und der Bildaufnahmeeinrichtung eingerichtet werden, auf die ein Nutzer beispielsweise über eine derartige Applikation zugreifen kann, um das Überwachungsbild zu empfangen. Dabei können die Informationen an mehreren angemeldeten Geräten angezeigt werden. Die einzelnen Nutzer der Applikation können weiterhin beispielsweise durch eine eindeutige Benutzerkennung (z. B. amtliches Kennzeichen des Transportfahrzeuges) identifiziert werden. Es kann dann jedem Nutzer ein an die aktuelle Aufgabe angepasster Informationsumfang bereitgestellt werden. Es kann somit eine Anpassung erfolgen ob und in welcher Qualität ein Bildstrom zu Verfügung gestellt wird und/oder ob und in welchem Umfang weitere Daten übertragen werden.

Die von der Bildaufnahmeeinrichtung aufgenommenen Daten und/oder die weiteren Daten, die zusätzlich zu den von der Bildaufnahmeeinrichtung aufgenommenen Daten an die Empfangs- und Anzeigeeinrichtung übermittelt werden, können gespeichert werden.

Die Speicherung kann in einer ersten Speichereinrichtung erfolgen, die an der Baumaschine angeordnet ist und/oder in einer zweiten Speichereinrichtung erfolgen, die an der Empfangs- und Anzeigeeinrichtung angeordnet ist.

Insbesondere als Nachweis bei Kollisionen zwischen Transportfahrzeug und Baumaschine wird vorgeschlagen, dass der Bildstrom und/oder der Nachrichtenstrom gespeichert werden. Dies ermöglicht es auch nach einer Kollision nachzuvollziehen, ob die Kollision durch den Führer des Transportfahrzeugs oder den Führer der Baumaschine verursacht wurde.

Um jedoch Kollisionen und beispielsweise Überladungen von Transportfahrzeugen frühzeitig zu vermeiden, wird vorgeschlagen, dass auf den Monitor des kompakten Computers eine Referenzabbildung eingeblendet wird und bei einer vorgegebenen Abweichung des Bildstromes von der Referenzabbildung ein Signal ausgelöst wird. Ein Signal, das auf eine Abweichung von einer Vorgabe hinweist, kann ein Ton, eine Farbgebung oder beispielsweise auch eine Vibration der Anzeigeeinrichtung sein. Die Referenzabbildung kann beispielsweise eine Darstellung einer optimierten Position von Transportfahrzeug und Baumaschine relativ zueinander sein oder eine maximale Beladung der Ladeflächen des Transportfahrzeugs. Hierzu kann das Überwachungsbild mit einer animierten Bildbegrenzung versehen werden, welche durch den Anwender der mobilen Applikation justiert werden kann, damit dieser einen eigenständigen Referenzpunkt hat, um zum Beispiel bei jedem Andockverfahren sicher an die Baumaschine zu rangieren.

Nachfolgend werden an einem Ausführungsbeispiel zunächst der Beladeprozess eines Transportfahrzeugs und anschließend das Entladen eines Transportfahrzeugsmit Bezug auf die Zeichnung näher erläutert. Es zeigt:
- Figur 1: schematisch eine Seitenansicht von Transportfahrzeugund Baumaschine mit Bildaufnahmeeinrichtung mit Weitwinkelkamera,
- Figur 2: schematisch eine Seitenansicht gemäß Figur 1 mit Bildaufnahmeeinrichtung mit zwei Kameras,
- Figur 3: eine Draufsicht auf die in Figur 2 gezeigte Anordnung,
- Figur 4: eine Seitenansicht zur Darstellung des ersten Schrittes der Beladung des Transportfahrzeugs,
- Figur 5: eine schematische Seitenansicht gemäß Figur 4 mit etwas zurückgefahrenem Transportfahrzeug,
- Figur 6: eine schematische Seitenansicht gemäß Figur 5 mit weiter zurückgefahrenem Transportfahrzeug,
- Figur 7: schematisch eine Seitenansicht mit wieder vorgefahrenem Transportfahrzeug,
- Figur 8: schematisch eine Seitenansicht eines zu einer Baumaschine beabstandeten Transportfahrzeug,
- Figur 9: schematisch eine Seitenansicht eines an eine Baumaschine herangefahrenen Transportfahrzeugs,
- Figur 10: schematisch eine Seitenansicht eines Transportfahrzeugsmit schräg gestellter Ladefläche,
- Figur 11: schematisch eine Draufsicht auf die in Figur 9 gezeigte Anordnung von Transportfahrzeugund Baumaschine.

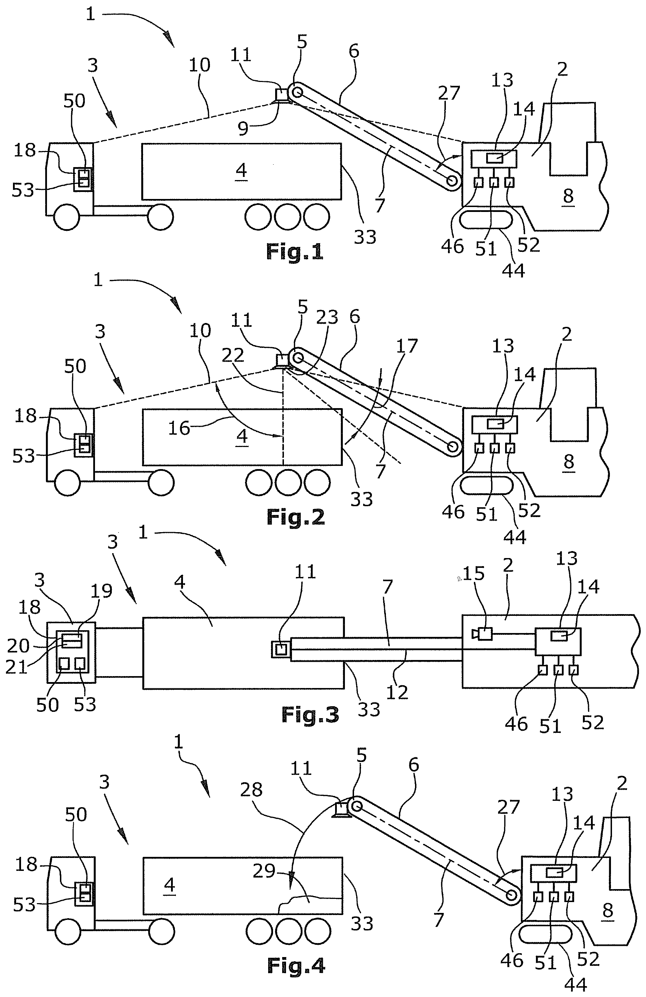

Die Figur 1 zeigt das System 1 aus Baumaschine 2, Transportfahrzeug3 mit Laderaum 4 und Bildaufnahmeeinrichtung 5. Die Bildaufnahmeeinrichtung 5 ist an der Baumaschine 2 angeordnet und zumindest auf den Laderaum 4 des Transportfahrzeugs 3 ausgerichtet. Die Baumaschine 2 weist als Fördereinrichtung 6 ein schwenkbar am Maschinenrahmen 8 der Baumaschine 2 angeordnetes Förderband 7 auf. Die Bildaufnahmeeinrichtung 5 weist eine oder mehrere Kameras 11 zur Aufnahme von Daten auf**.** Die Bildaufnahmeeinrichtung 5 ist am obersten Ende des Förderbandes 7 so angeordnet, dass das Kameraobjektiv 9 der Kamera 11 derart nach unten gerichtet ist, dass der Blickwinkel 10 den gesamten Laderaum 4, des Transportfahrzeugs3 und einen Teil der Baumaschine 2 erfasst.

Im dargestellten Ausführungsbeispiel ist die Baumaschine 2 vorzugsweise eine Fräsmaschine zum Fräsen eines Abschnitts eines Bodenbelags auf. Mittels der Fräsmaschine wird der Bodenbelag gefräst und das abgetragene Material bzw. Fräsgut über das zumindest eine Förderbandes 7 auf das Transportfahrzeug 3 geladen. Die Fräsmaschine kann zumindest einen Maschinenrahmen aufweisen. Ferner kann die Fräsmaschine eine höhenverstellbare Fräswalze zum Bearbeiten des Bodenbelags aufweisen. Die Fräswalze wird von einer Antriebseinheit angetrieben. Die Antriebseinheit ist vorzugsweise ein Antriebsmotor, insbesondere ein Verbrennungsmotor. Die Fräsmaschine weist Fahreinrichtungen 44 auf. Diese Fahreinrichtungen 44 können Räder oder Kettenlaufwerke sein. Die Fahreinrichtungen 44 können über Hubsäulen mit dem Maschinenrahmen 8 verbunden sein. Mit Hilfe der Hubsäulen kann die Fräsmaschine bzw. der Maschinenrahmen 8 relativ zum Bodenbelag höhenverstellt werden. Durch Verstellen der Hubsäulen wird der Maschinenrahmen 8 höhenverstellt und damit wird auch die im Maschinenrahmen 8 gelagerte und nicht dargestellte Fräswalze höhenverstellt. Alternativ oder zusätzlich kann die Fräswalze relativ zum Maschinenrahmen 8 höhenverstellbar sein.

Eine Empfangs- und Anzeigeeinrichtung 18 ist an oder in dem Transportfahrzeug 3 angeordnet, wobei die von der Bildaufnahmeeinrichtung 5 aufgenommenen Daten mittels einer an der Baumaschine angeordneten Sendeeinrichtung 46 an die Empfangs- und Anzeigeeinrichtung 18 übermittelt werden. Alternativ kann die Empfangs- und Anzeigeeinrichtung 18 als Mobilteil ausgeführt sein und beispielsweise vom Transportfahrzeugführer mitgeführt werden.

Die Bildaufnahmeeinrichtung 5 kann zusätzlich ein Kennzeichen, beispielsweise das amtliche Kennzeichen des Transportfahrzeugs erfassen. Auch die Information über das Kennzeichen kann mittels der Sendeeinrichtung 46 an die Empfangs- und Anzeigeeinrichtung gesendet werden.

Die Sendeeinrichtung 46 kann zusätzlich zu den von der Bildaufnahmeeinrichtung aufgenommenen Daten weitere Daten an die Empfangs- und Anzeigeeinrichtung 18 senden.

Die weiteren Daten können sonstige Maschineninformationen, insbesondere das Fräsgut betreffende Daten und/oder Nachrichten von dem Fahrer der Baumaschine 2 an den Fahrer des Transportfahrzeugs 3, vorzugsweise von dem Fahrer der Baumaschine 2 vorgegebene Start- oder Stoppsignale für den Fahrer des Transportfahrzeugs 3, sein.

Die Empfangs- und Anzeigeeinrichtung 18 kann eine zweite Sendeeinrichtung 50 aufweisen und an der Baumaschine 2 eine zweite Empfangseinrichtung 51 angeordnet sein, so dass von der zweiten Sendeeinrichtung 50 Nachrichten von dem Fahrer des Transportfahrzeugs 3 an den Fahrer der Baumaschine 2 gesendet werden können. Es können somit Nachrichten zwischen dem Transportfahrzeugführer und dem Baumaschinenführer ausgetauscht werden.

Die zweite Sendeeinrichtung 50 und die Empfangs- und Anzeigeeinrichtung können als Einheit ausgebildet sein. Auch die zweite Empfangseinrichtung und die Sendeeinrichtung 46 können als eine Einheit ausgebildet sein.

Das System 1 kann eine Auswerteeinheit 13 zur Auswertung der mit der Bildaufnahmeeinrichtung 5 aufgenommenen Daten, beispielsweise mit einer Einheit zur Bildanalyse 14 aufweisen.

Die Auswerteeinheit 13 kann durch Auswerten der Bilddaten den Füllstand im Laderaum und/oder den Abstand zwischen Baumaschine 2 und Transportfahrzeug 3 und/oder die Auftreffstelle von Material in dem Laderaum 4 ermittelt.

Mittels des Abstandes zwischen Baumaschine 2 und Transportfahrzeug 3 kann eine drohende Kollision von Baumaschine 2 und Transportfahrzeug 3 ermittelt werden.

Die Auftreffstelle des Materials kann die tatsächliche Auftreffstelle des Materials im Laderaum 4 als auch, bei ausgeschalteter Fördereinrichtung, die potentielle Auftreffstelle im Laderaum 4 sein, wenn das Förderband 6 wieder angetrieben wird. Zur Ermittlung der potentiellen Auftreffstelle können auch weitere Parameter, wie beispielsweise die Neigung des Förderbandes 6 einbezogen werden.

Anhand der tatsächlichen Auftreffstelle des Materials im Laderaum 4 kann ermittelt werden, ob das Material noch innerhalb es Laderaums 4 abgeworfen wird und ob die Auftreffstelle im Randbereich des Laderaums 4 ist und somit das Transportfahrzeug 3 sich zeitnah in Bezug zu der Baumaschine 2 wieder bewegen muss.

Die weiteren Daten, die zusätzlich zu den von der Bildaufnahmeeinrichtung 5 aufgenommenen Daten von der Sendeeinrichtung 46 an die Empfangs- und Anzeigeeinrichtung 18 gesendet werden, können von der Auswerteeinheit 13 ermittelte Daten sein, insbesondere Start- oder Stoppsignale für den Fahrer des Transportfahrzeugs 3 und/oder Masse des verladenen Fräsguts und/oder Kollisionswarnung.

Die Auswerteeinheit 13 kann abhängig von der Auftreffstelle des Materials in dem Laderaum und/oder abhängig von dem Abstand zwischen Baumaschine 2 und Transportfahrzeug 3 ein Start- oder Stoppsignal ermittelt, dass über die Sendeeinrichtung 45 an die Empfangs- und Anzeigeeinrichtung 18 gesendet wird.

Das Kameraobjektiv 9 ist vorzugsweise ein Weitwinkelobjektiv einer Kamera 11, die als Videokamera einen ursprünglichen Bildstrom 12 aufnimmt. Die aufgenommenen Daten können zu der Auswerteeinheit 13 eleitet werden. Alternativ oder zusätzlich kann auch eine Infrarotkamera und/oder eine stereoskopische Kamera und/oder eine PMD-Kamera verwendet werden.

Die Kamera 11 kann als Videokamera einen ursprünglichen Bildstrom 12 an die Auswerteeinheit 13 leiten, der Informationen aus dem gesamten Blickwinkel 10 abdeckt. Sie kann jedoch auch Teilbildströme zu Teilblickwinkeln 16, 17 an die Auswerteeinheit 13 leiten. Es können jedoch auch in der Auswerteeinheit 13 aus einem ursprünglichen Bildstrom 12, Teilbildströme generiert werden oder es können auch erst auf der Empfangs- und Anzeigeeinrichtung 18 aus dem ursprünglichen Bildstrom 12 Teilbildströme erzeugt werden und auf einem Monitor 19 der Empfangs- und Anzeigeeinrichtung 18 als Bilder 20 und 21 angezeigt werden. Die Erzeugung von Teilbildströmen kann somit bereits bei der Bildaufnahmeeinrichtung 5 durch zwei Kameras 22, 23 mit der Auswerteeinheit 13oder der Empfangs- und Anzeigeeinrichtung 18 erzeugt werden. In dem in Figur 3 gezeigtem Ausführungsbeispiel werden zwei Teilbildströme in der Auswerteeinheit 13 erzeugt und mittels der Sendeeinrichtung 46 derart versendet, dass die Informationen zu den Bildern von der Empfangs- und Anzeigeeinrichtung 18 empfangen werden können.

Die Kamera 11 ist an dem Förderband 7 der Fördereinrichtung 6 derart befestigt, dass die Ausrichtung unabhängig vom Neigungswinkel 27 des Förderbandes relativ zum Maschinenrahmen 8 der Baumaschine 2 immer direkt nach unten weist. Dadurch ist sichergestellt, dass die Kamera immer die Ladefläche und denjenigen Teil des Förderbandes aufnimmt, an dem der Laderaum 4 des Transportfahrzeugs 3 mit der Fördereinrichtung 6 kollidieren könnte.

An der Baumaschine 2 kann eine erste Speichereinrichtung 52 angeordnet sein und/oder die Empfangs- und Anzeigeeinrichtung 18 kann eine zweite Speichereinrichtung 53 aufweisen. Die von der Bildaufnahmeeinrichtung 5 aufgenommenen Daten und/oder die weiteren Daten, die zusätzlich zu den von der Bildaufnahmeeinrichtung 5 aufgenommenen Daten an die Empfangs- und Anzeigeeinrichtung 18 übermittelt werden, können in der ersten und/oder der zweiten Speichereinrichtung 52, 53 gespeichert werden.

Eine bevorzugte Ausführungsvariante sieht vor, dass die Empfangs- und Anzeigeeinrichtung 18 ein tragbaren Computer, vorzugsweise ein Mobiltelefon ist. Ein Mobiltelefon hat den Vorteil, dass dies von jedem Transportfahrzeugführer mitgeführt wird und somit nicht für jedes Transportfahrzeug eine eigene Empfangs- und Anzeigeeinrichtung 18 vorgesehen werden muss. Auf einem solchen Mobiltelefon kann ein Anwendungsprogramm installiert werden mit Hilfe dessen die Daten der Sendeeinrichtung empfangen und auf dem Monitor des Mobiltelefons dargestellt werden können.

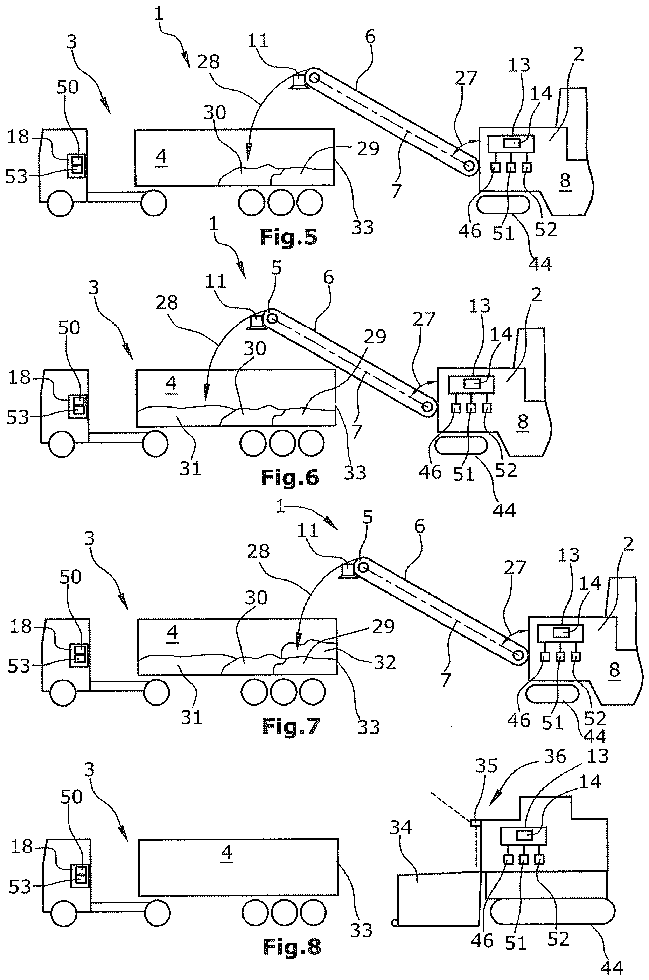

Beim Einsatz des Systems zum Beladen eines Transportfahrzeugs 3 mit der Baumaschine 2 wird zunächst, wie in Figur 4 gezeigt, mittels der Fördereinrichtung 6 Material 28 auf die Ladefläche 4 des Muldenfahrzeuges 3 gefördert. Dabei entsteht ein erster Haufen 29 im hinteren Bereich der Ladeflache 4. Das Transportfahrzeug 3 steht, wohingegen sich die Baumaschine 2 kontinuierlich weiterbewegt. Da die Baumaschine 2 weiterfährt, wandert die Abwurfstelle zu dem vorderen Ende der Ladefläche, was in den Figuren 5 und 6 mit den Haufen 30, 31 dargestellt ist. Wenn die Abwurfstelle das vordere Ende der Ladefläche erreicht hat, muss der Fahrzeugführer des Transportfahrzeugs dieses relativ zur Baumaschine nach vorne bewegen. Wenn die Auftreffstelle das hintere Ende der Ladefläche erreicht hat muss der Fahrzeugführer des Transportfahrzeugs das Transportfahrzeug wieder stoppen. Im hinteren Bereich der Ladefläche entsteht wieder Haufen 32. Mit Hilfe der vorliegenden Erfindung erhält der Transportfahrzeugführer die Information, ob er das Fahrzeug bewegen oder stoppen muss über die Empfangs- und Anzeigeeinrichtung 18. Auf dieser ist ein Bild des Laderaums 4 dargestellt, so dass der Transportfahrzeugführer schon alleine aufgrund dieses Bildes erkennt, wann das Transportfahrzeug 3 bewegt werden muss. Zusätzlich erhält der Transportfahrzeugführer Informationen von dem Baumaschinenführer oder von der Auswerteeinheit 13, ob das Transportfahreug bewegt werden soll oder nicht, beispielsweise in Form von Start-Stopp Signalen. Auch kann er beispielsweise die Information darüber erhalten, was für ein Material aufgeladen worden ist, ob das Maximalgewicht erreicht ist und ob eine Kollision mit der Baumaschine droht. Auf diese Weise kann die Koordination zwischen Transportfahrzeug und Baumaschine erheblich verbessert werden. Zusätzlich kann eine Signalisierung beispielsweise akustisch durch eine Hupe 15 erfolgen.

Die Figur 2 zeigt, wie mit der Kamera 11 sowohl der Laderaum 4 als auch die besonders kritische Stelle an der Fördereinrichtung 6 beobachtet werden kann, um einerseits die sachgerechte Befüllung der Ladefläche zu kontrollieren und andererseits eine Kollision zwischen Bordwand 33 und Fördereinrichtung 6 zu vermeiden. Dabei ist der Beladevorgang besonders schwierig, wenn nicht nur das Transportfahrzeug 3 sondern auch die Baumaschine 2 beweglich ist.

Im vorliegenden Fall kann die Baumaschine 2, die Fördereinrichtung 6 schwenken und die Baumaschine kann in Ausrichtung des Transportfahrzeugs3 vor und zurück bewegt werden. Die ordnungsgemäße Beladung des Transportfahrzeugs3 hängt somit nicht nur von der absoluten Position des Transportfahrzeugs3 ab, sondern von der relativen Position des Transportfahrzeugs3 zur Fördereinrichtung 6 und zum Maschinenrahmen 8 der Baumaschine 2.

Da sich die Kamera 11 mit der Baumaschine 2 bewegt, erhält der Fahrzeugführer über die Kamera immer ein Bild der Situation, das das Transportfahrzeug3 und insbesondere dessen Ladefläche 4 in Bezug auf die Baumaschine 2 und aus der Richtung der Baumaschine 2 zeigt, um das Transportfahrzeug 3relativ zur Baumaschine 2 in die richtige Position zu bewegen.

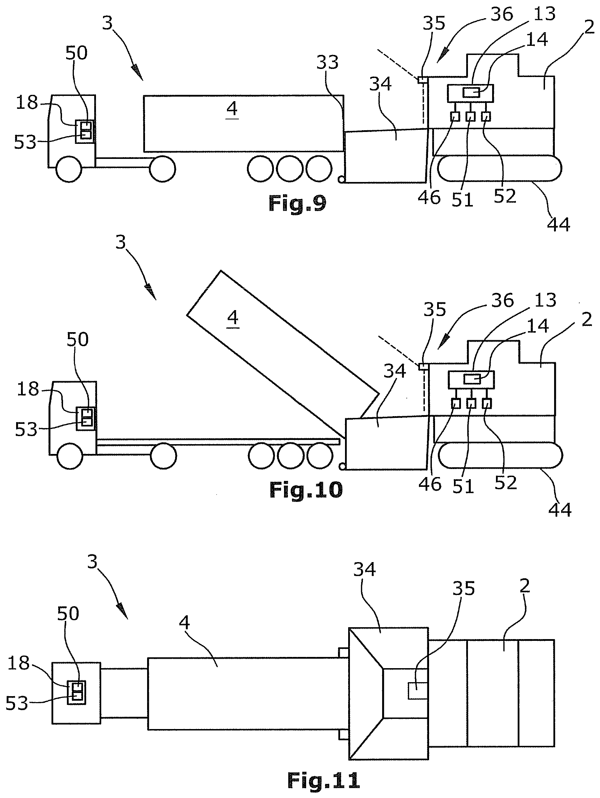

Die Figuren 8 bis 11 zeigen das Entladen eines Transportfahrzeugs3, bei dem die Ladefläche 4 zunächst an die Baumaschine 2 herangefahren wird, sodass die Ladefläche 4, wie in Figur 9 gezeigt, vor einem Aufnahmebehälter 34 positioniert ist. Anschließend wird die Ladefläche 4 gekippt, sodass Schüttgut in den Aufnahmebehälter 34 fließt. Dabei ist eine Kamera 35 derart im oberen Drittel der Baumaschine 2 positioniert, dass sie als Bildaufnahmeeinrichtung 36 eine Kamera mit einem Breitwinkelobjektiv oder mehrere Kameras aufweisen kann, die eine oder mehrere Bildströme, wie in Figur 3 gezeigt, an eine Auswerteeinheit 13 leiten.

Bei einer Baumaschine 2 gemäß Figuren 8 bis 11 handelt es sich vorzugsweise um einen Straßenfertiger. Wird der Straßenfertiger mit Material beladen, bewegt sich der Straßenfertiger langsam vorwärts. Das Transportfahrzeug 3 fährt langsam rückwärts an den Straßenfertiger heran bis ein Kontakt zwischen Straßenfertiger und Transportfahrzeug 3 besteht. Danach wird das Transportfahrzeug 3 von dem Straßenfertiger vor dem Straßenfertiger hergeschoben und es erfolgt die Entleerung.

Auch beim Entladen kann somit mit der Kamera sowohl die Ladefläche als auch der Aufnahmebehälter 34 beobachtet werden, um einerseits während der Andockphase insbesondere bei einer Bewegung von Baumaschine 2 und Transportfahrzeug 3einen starken Zusammenstoß zu vermeiden und andererseits, um das Material mit unterschiedlicher Geschwindigkeit in die Mulde des Aufnahmebehälter 34 rutschen zu lassen. Dies ist insbesondere dann von Vorteil, wenn die Baumaschine das Material mit unterschiedlicher Geschwindigkeit abtransportiert. Die Baumaschine 2 nach den Figuren 8 - 11 weist ebenfalls vorzugsweise eine Auswerteeinheit 13 mit einem Bildanalyseprogramm 14 auf. Ferner ist vorzugsweise eine Sendeeinrichtung 46, Empfangseinrichtung 51 und eine Speichereinrichtung 52 vorgesehen. Diese habe die gleichen Funktionen wie bereits für die Baumaschine gemäß Figuren 1 bis 7 beschrieben.

Das Transportfahrzeug 3 kann genauso wie das Transportfahrzeug 3 gemäß der Figuren 1 bis 7 eine Empfangs- und Anzeigeneinrichtung 18 auf, die auch eine Sendeeinrichtung 50 und eine Speichereinrichtung 53 aufweisen kann. Die Funktionen sind die gleichen wie die gemäß Figuren 1 bis 7 beschriebene Funktionen.

Der gesamte Be- und Entladeprozess benötigt auch eine Kommunikation zwischen den Beteiligten. Dafür können über die Empfangs- und Anzeigeeinrichtung 18 und/oder die zweite Sendeeinrichtung 50 und die auf der Baumaschine angeordneten Sende- und Empfangseinrichtung 46, 51 Nachrichtenströme übertragen werden. Auch ist es vorteilhaft, wenn die Nachrichtenströme in einer oder beiden Speichereinrichtungen 52, 53 gespeichert werden können.

Auf dem Monitor 19 können zumindest auf einem Bild 20, 21 Referenzabbildungen eingeblendet werden, die beispielsweise die optimale Position des Transportfahrzeugs 3 relativ zur Baumaschine 2 zeigen. Diese optimale Position bleibt unverändert, selbst wenn sich das Transportfahrzeug 3 und die Baumaschine 2 bewegen, da die optimale Position des Transportfahrzeugs beispielsweise beim Andocken an die Baumaschine 2 aus Sicht der an der Baumaschine 2 angeordneten Kamera unverändert bleibt. Bei einer starken Abweichung des Bildes 20, 21 von der eingeblendeten Referenzabbildung kann eine Information an die Empfangs- und Anzeigeeinrichtung 18 gesendet werden oder ein Signal ausgelöst werden, sodass beispielsweise die Hupe 15 ertönt.

## Patentansprüche

1. System (1) aus Baumaschine (2), Transportfahrzeug (3) mit Laderaum (4) und Bildaufnahmeeinrichtung (5, 36),
wobei die Bildaufnahmeeinrichtung (5, 36) an der Baumaschine (2) angeordnet ist und zumindest auf den Laderaum (4) des Transportfahrzeugs (3) ausgerichtet ist,
wobei eine Empfangs- und Anzeigeeinrichtung (18) an oder in dem Transportfahrzeug (3) angeordnet ist, wobei die von der Bildaufnahmeeinrichtung (5, 36) aufgenommenen Daten mittels einer an der Baumaschine (2) angeordneten Sendeeinrichtung (46) an die Empfangs- und Anzeigeeinrichtung (18) übermittelt werden, wobei die Baumaschine (2) eine Fördereinrichtung (6) aufweist,
**dadurch gekennzeichnet, dass**
die aufgenommenen und übermittelten Daten Bilddaten sind und die Bildaufnahmeeinrichtung (5, 36) mindestens eine Kamera (11, 35) zur Aufnahme eines Bildstroms (12) aufweist, wobei die Bildaufnahmeeinrichtung (5, 36) auch auf die Fördereinrichtung (6) ausgerichtet ist, wobei mit der Kamera (11) sowohl der Laderaum (4) als auch die besonders kritische Stelle an der Fördereinrichtung (6) beobachtbar sind, um einerseits die sachgerechte Befüllung der Ladefläche zu kontrollieren und andererseits eine Kollision zwischen Bordwand (33) und Fördereinrichtung (6) zu vermeiden.

2. System (1) nach Anspruch 1, **dadurch gekennzeichnet, dass** das System (1) eine Auswerteeinheit (13) mit einem Bildanalyseprogramm (14) aufweist, das zusätzliche Daten aus den Bildinformationen ermittelt.

3. System (1) nach Anspruch 2, **dadurch gekennzeichnet, dass** die Auswerteeinheit (13) durch Auswerten der Bilddaten den Füllstand im Laderaum (4) und/oder den Abstand zwischen Baumaschine (2) und Transportfahrzeug (3) und/oder die Auftreffstelle von Material in dem Laderaum (4) ermittelt.

4. System (1) nach Anspruch 3, **dadurch gekennzeichnet, dass** weiteren Daten, die zusätzlich zu den von der Bildaufnahmeeinrichtung (5, 36) aufgenommenen Daten von der Sendeeinrichtung (46) an die Empfangs- und Anzeigeeinrichtung (18) gesendet werden, von der Auswerteeinheit (13) ermittelte Daten sind, insbesondere Start- oder Stoppsignale für den Fahrer des Transportfahrzeugs und/oder eine Masse des verladenen Fräsguts und/oder das Volumen des auf das Transportfahrzeug verladenen Fräsguts und/oder der Füllstand des Laderaums (4) und/oder eine Kollisionswarnung.

5. System nach Anspruch 3 oder 4, **dadurch gekennzeichnet, dass** die Auswerteeinheit (13) abhängig von der Auftreffstelle des Materials in dem Laderaum (4) und/oder abhängig von dem Abstand zwischen Baumaschine und Transportfahrzeug ein Start- oder Stoppsignal ermittelt, dass über die Sendeeinrichtung an die Empfangs- und Anzeigeeinrichtung (18) gesendet wird.

6. Verfahren zum Anzeigen eines Bildstroms (12, 24, 25) bei einem System nach einem der Ansprüche 1 bis 5, wobei das Verfahren beim Beladen oder Entladen des Transportfahrzeugs (3) folgende Schritte umfasst:
- Aufnehmen von Bildern (20, 21) mit einer an der Baumaschine (2), montierten, zumindest auf den Laderaum (4) des Transportfahrzeugs (3) ausgerichteten Bildaufnahmeeinrichtung (5, 36), insbesondere Kamera (11, 35);
- Senden, Empfangen und Anzeigen der mit der Bildaufnahmeeinrichtung aufgenommenen Daten auf einer an oder in dem Transportfahrzeug (3) angeordneten Empfangs- und Anzeigeeinrichtung (18).

7. Verfahren nach Anspruch 6, **dadurch gekennzeichnet, dass** es folgenden Schritt aufweist:
- gleichzeitiges Anzeigen von zumindest zwei Teilsatz-Bildströmen (24, 25) auf einem Monitor (19) der Empfangs- und Anzeigeeinrichtung, wobei jeder Teilsatzbildstrom (24, 25) einen getrennten Teilsatz von Bildern (20, 21) aus dem Bildstrom (12) enthält.

8. Verfahren nach Anspruch 6 oder 7, **dadurch gekennzeichnet, dass** die mit der Kamera aufgenommenen Daten mit einer Auswerteeinheit (13) analysiert werden.

9. Verfahren nach Anspruch 8, **dadurch gekennzeichnet, dass** mittels der Auswerteeinheit (13) durch Auswerten der Bilddaten der Füllstand im Laderaum (4) und/oder der Abstand zwischen Baumaschine (2) und Transportfahrzeug (3) und/oder die Auftreffstelle von Material in dem Laderaum (4) ermittelt wird.

10. Verfahren nach Anspruch 8 oder 9, **dadurch gekennzeichnet, dass** weiteren Daten, die zusätzlich zu den von der Bildaufnahmeeinrichtung (5, 36), insbesondere von der Kamera (11, 35) aufgenommenen Daten an die Empfangs- und Anzeigeeinrichtung (18) übermittelt werden, von der Auswerteeinheit (13) ermittelte Daten sind, insbesondere Start- oder Stoppsignale für den Fahrer des Transportfahrzeugs und/oder eine Massedes verladenen Fräsguts und/oder ein Volumen des verladenen Fräsguts und/oder der Füllstand im Laderaum (4) und/oder eine Kollisionswarnung.

## Claims

1. System (1) comprising construction machine (2), transport vehicle (3) with loading space (4) and image-recording device (5, 36),
wherein the image-recording device (5, 36) is arranged at the construction machine (2) and aligned, as a minimum, towards the loading space (4) of the transport vehicle (3), wherein a reception and display device (18) is arranged at or in the transport vehicle (3), wherein the data recorded by the image-recording device (5, 36) are transmitted to the reception and display device (18) by means of a transmission device (46) arranged at the construction machine (2), wherein the construction machine (2) comprises a conveying device (6),
**characterized in that**
the data recorded and transmitted are image data and the image-recording device (5, 36) comprises at least one camera (11, 35) for recording an image stream (12), wherein the image-recording device (5) is also aligned towards the conveying device (6), wherein both the loading space (4) and the particularly critical section at the conveying device (6) may be observed with the camera (11) in order to control the proper filling of the loading surface on the one hand, and prevent a collision between the tailboard (33) and the conveying device (6) on the other.

2. System (1) in accordance with claim 1, **characterized in that** the system (1) comprises an evaluation unit (13) with an image-analysing programme (14) which obtains additional data from the image information.

3. System (1) in accordance with claim 2, **characterized in that** the evaluation unit (13) determines the filling level in the loading space (4) and/or the distance between the construction machine (2) and the transport vehicle (3) and/or the point of impingement of material in the loading space (4) by evaluating the data of the image-recording device (5, 36).

4. System (1) in accordance with claim 3, **characterized in that** further data which are transmitted by the transmission device (46) to the reception and display device (18) in addition to the data recorded by the image-recording device (5, 36), are data determined by the evaluation unit (13), in particular, start or stop signals for the driver of the transport vehicle and/or a mass of the milling material loaded and/or the volume of the milling material loaded onto the transport vehicle and/or the filling level of the loading space (4) and/or a collision warning.

5. System in accordance with claim 3 or 4, **characterized in that** the evaluation unit (13) determines, as a function of the point of impingement of the material in the loading space (4) and/or as a function of the distance between the construction machine and the transport vehicle, a start or stop signal which is transmitted to the reception and display device (18) via the transmission device.

6. Method for displaying an image stream (12, 24, 25) in a system according to one of claims 1 to 5, wherein, during the loading or unloading of a transport vehicle (3), the method comprises the following steps:
- recording images (20, 21) with an image-recording device (5, 36), in particular a camera (11, 35), mounted at a construction machine (2) and aligned, as a minimum, towards the loading space (4) of the transport vehicle (3);
- transmitting, receiving and displaying the data recorded with the image-recording device on a reception and display device (18) arranged at or inside the transport vehicle (3).

7. Method according to claim 6, **characterized in that** it comprises the following step:
- simultaneous display of at least two subset image streams on a screen (19) of the reception and display device (18), wherein each subset image stream contains a separate subset of images (20, 21) from the image stream (12).

8. Method according to claim 6 or 7, **characterized in that** the data recorded by means of the camera are analysed by means of an evaluation unit (13).

9. Method according to claim 8, **characterized in that** the filling level in the loading space (4) and/or the distance between the construction machine (2) and the transport vehicle (3) and/or the point of impingement of material in the loading space (4) is determined by evaluating the image data by means of the evaluation unit (13).

10. Method according to claim 8 or 9, **characterized in that** further data which are transmitted by the transmission device (46) to the reception and display device (18) in addition to the data recorded by the image-recording device (5, 36), are data determined by the evaluation unit (13), in particular, start or stop signals for the driver of the transport vehicle and/or a mass of the milling material loaded and/or the volume of the milling material loaded onto the transport vehicle and/or the filling level of the loading space (4) and/or a collision warning.

## Revendications

1. Système (1) constitué d'une machine de chantier (2), d'un véhicule de transport (3) comportant un espace de chargement (4) et d'un dispositif de prise d'images (5, 36),
dans lequel le dispositif de prise d'images (5, 36) est disposé sur la machine de chantier (2) et est orienté au moins vers l'espace de chargement (4) du véhicule de transport (3),
dans lequel
un dispositif de réception et d'affichage (18) est disposé sur le véhicule de transport (3) ou dans celui-ci, dans lequel les données enregistrées par le dispositif de prise d'images (5, 36) sont transmises au dispositif de réception et d'affichage (18) au moyen d'un dispositif d'émission (46) disposé sur la machine de chantier (2), dans lequel la machine de chantier (2) présente un dispositif d'acheminement (6),
**caractérisé en ce que**
les données enregistrées et transmises sont des données d'image et le dispositif de prise d'images (5, 36) présente au moins une caméra (11, 35) permettant d'enregistrer un flux d'images (12), dans lequel
le dispositif de prise d'images (5, 36) est également orienté vers le dispositif d'acheminement (6), dans lequel tant l'espace de chargement (4) que le point particulièrement critique sur le dispositif d'acheminement (6) peuvent être observés avec la caméra (11) afin, d'une part, de contrôler le remplissage approprié de la plateforme de chargement et, d'autre part, d'éviter une collision entre un hayon (33) et le dispositif d'acheminement (6).

2. Système (1) selon la revendication 1, **caractérisé en ce que** le système (1) présente une unité d'évaluation (13) comportant un programme d'analyse d'image (14) déterminant des données supplémentaires à partir des informations d'image.

3. Système (1) selon la revendication 2, **caractérisé en ce que** l'unité d'évaluation (13) détermine le niveau de remplissage dans l'espace de chargement (4) et/ou la distance entre la machine de chantier (2) et le véhicule de transport (3) et/ou le point d'impact de matériau dans l'espace de chargement (4) en évaluant les données d'image.

4. Système (1) selon la revendication 3, **caractérisé en ce que** d'autres données, lesquelles sont envoyées par le dispositif d'émission (46) au dispositif de réception et d'affichage (18) outre les données enregistrées par le dispositif de prise d'images (5, 36), sont des données déterminées par l'unité d'évaluation (13), en particulier des signaux de démarrage ou d'arrêt pour le conducteur du véhicule de transport et/ou une masse du fraisat chargé et/ou le volume du fraisat chargé sur le véhicule de transport et/ou le niveau de remplissage de l'espace de chargement (4) et/ou un avertissement de collision.

5. Système selon la revendication 3 ou 4, **caractérisé en ce que** l'unité d'évaluation (13) détermine, en fonction du point d'impact du matériau dans l'espace de chargement (4) et/ou en fonction de la distance entre la machine de chantier et le véhicule de transport, un signal de démarrage ou d'arrêt qui est envoyé au dispositif de réception et d'affichage (18) par l'intermédiaire du dispositif d'émission.

6. Procédé permettant l'affichage d'un flux d'images (12, 24, 25) dans un système selon l'une des revendications 1 à 5, dans lequel le procédé comprend les étapes suivantes lors du chargement ou du déchargement du véhicule de transport (3) :
- enregistrement d'images (20, 21) avec un dispositif de prise d'images (5, 36), en particulier une caméra (11, 35), monté sur la machine de chantier (2) et orienté au moins vers l'espace de chargement (4) du véhicule de transport (3) ;
- émission, réception et affichage des données enregistrées avec le dispositif de prise d'images sur un dispositif de réception et d'affichage (18) disposé sur le véhicule de transport (3) ou dans celui-ci.

7. Procédé selon la revendication 6, **caractérisé en ce qu'**il présente l'étape suivante :
- affichage simultané d'au moins deux flux d'images de sous-ensembles (24, 25) sur un moniteur (19) du dispositif de réception et d'affichage, dans lequel chaque flux d'images de sous-ensembles (24, 25) contient un sous-ensemble séparé d'images (20, 21) provenant du flux d'images (12).

8. Procédé selon la revendication 6 ou 7, **caractérisé en ce que** les données enregistrées avec la caméra sont analysées avec une unité d'évaluation (13).

9. Procédé selon la revendication 8, **caractérisé en ce que** le niveau de remplissage dans l'espace de chargement (4) et/ou la distance entre la machine de chantier (2) et le véhicule de transport (3) et/ou le point d'impact de matériau dans l'espace de chargement (4) sont déterminés au moyen de l'unité d'évaluation (13) en évaluant les données d'image.

10. Procédé selon la revendication 8 ou 9, **caractérisé en ce que** d'autres données, lesquelles sont transmises au dispositif de réception et d'affichage (18) outre les données enregistrées par le dispositif de prise d'images (5, 36), en particulier par la caméra (11, 35), sont des données déterminées par l'unité d'évaluation (13), en particulier des signaux de démarrage ou d'arrêt pour le conducteur du véhicule de transport et/ou une masse du fraisat chargé et/ou un volume du fraisat chargé et/ou le niveau de remplissage dans l'espace de chargement (4) et/ou un avertissement de collision.
